# EUROPEAN PATENT APPLICATION

(11) **EP 3 324 584 A1**
(43) Date of publication of application: **23.05.2018**
(21) Application number: 17203121.3
(22) Date of filing: 22.11.2017
(51) Int. Cl.: H04L 12/701

(54) **NETWORK MESSAGE PROCESSING**

(30) Priority: 22.11.2016 GB 201619741
(71) Applicant: Just Eat Holding Limited, London EC4M 7RF (GB)
(72) Inventor: Pugsley, Craig, London, EC4M 7RF (GB)
(74) Representative: Leach, Sean Adam

(57) **Abstract**

The present disclosure relates to the field of processing data requests in a network comprising multiple data nodes. As such, there is disclosed a computer implemented method of controlling processing of network messages. The method includes receiving a network message (403) comprising request data to be processed at any one of a plurality of destinations (104) in a geographic area and selecting one of the plurality of destinations (104). Statistical models are obtained and used to analyse the processing of requests. These models may be modified and applied to historical data of processed requests to enable the identification of a difference in request processing between the un-modified and the modified for a given destination. This information may then be communicated to the given destination.

## Description

### Field of the Invention

The present disclosure relates to methods and apparatus for use in the operation of computer networks, and more particularly for use in the routing of request messages transmitted over a network.

### Background

Distributed systems, such as networks of computers involved in the processing of requests for service delivery, may be subject to a variety of performance constraints. Optimising the delivery of a service may require complex adjustment of a number of parameters. In an entirely automated system, where the resources concerned are simply consumables such as fuel and electrical energy - resource planning can be achieved based on a simple optimisation of cost and benefit.

In the technical field of service provision which involves service provision by human personnel, a straightforward optimisation may not be appropriate. Rigid adherence to computerised rules may be inefficient or actively counterproductive.

Interconnected wide area and local area communications networks, such as the internet, and cellular telecommunications networks provide increasingly widespread data connectivity. Wireless LANs have become popular in the home due to ease of installation and use, and in facilities such as restaurants, retail locations, and commercial complexes. Such facilities often provide wireless LAN access to their customers to allow them to access the internet, and to interact with them by offering them goods and services.

Cellular telephone networks also provide very wide geographic coverage, and in most areas of many countries in the world. The data bandwidth of these networks is increasing and users can now access high bandwidth internet services in a wide variety of locations.

This widespread data connectivity represents a significant commercial opportunity because it enables consumers and end users to communicate needs and desires and to purchase services very efficiently. These commercial opportunities however also present technical challenges. In particular they place significant burden on the resources which must process requests for service provision, such as the preparation and/or delivery of articles. Typically these requests are mediated from client devices to a server operated by the service provider, or an intermediary, who must determine how to process that request.

In distributed networks of service provider locations, large numbers of requests for service may need to be processed by a relatively limited number of service provider locations.

The ability of each location to process requests may depend upon a wide variety of factors, and as noted above some of those factors involve personal human consideration of the personnel involved and their wellbeing. It is therefore a very significant problem to determine how to route such requests in such a network to ensure their efficient processing, and to ensure the wellbeing of the personnel involved in service provision. It is also a problem to determine how to allocate processing burden and how to arrange facilities, capabilities and resources at the different locations.

This problem is not amenable to straightforward automation, because as noted above ignoring human considerations in the rigid application of rules may be to the detriment of the personnel involved in service provision. A single human controller would be simply unable to assimilate all the information required to make the correct judgement about how to allocate processing burden and how to arrange facilities, capabilities and resources at the different locations.

### Summary

Aspects and embodiments of the invention are set out in the claims.

Embodiments relate to the provision of services across a geographic area. The resources needed to provide those services are typically disposed at a number of locations in and around that area. The control of these resources may be achieved using a virtual reality environment to obtain user input data as described herein. It will be appreciated in the context of the present disclosure that Virtual reality (VR) typically refers to computer technologies that use a 3D graphical representation and 3D position tracking of a user (or a user carried interface device) to simulate a user's physical presence in this environment. Such technologies may also provide feedback to the user based on this tracking and the simulated "interactions" between the user (or a user carried interface device) and objects depicted in this graphical representation. Such technologies may operate using specialized displays, which may be incorporated into goggles or a headset of some kind. Projectors, tablet devices, and other computer displays may also be used for this purpose.

According to the methods described herein, the use of a VR interface (and other methods described herein) may enable a complex request processing network to be adapted and controlled to promote efficiency whilst also promoting the wellbeing of the personnel involved in service delivery.

In such a request processing network client devices may send requests for a service to a central server. The server may then select a resource (at one of the locations) which is to process each of those requests and send the requests to the selected destinations to enable the service to be provided to the client device.

Each location generally comprises a network node comprising some processing functionality and is adapted to use local resources at the location to process requests that are sent to it. The quality of service it can provide is constrained by the resources, capabilities and facilities available for the delivery of the requested service at that location.

Each location may need to service a variety of different types of request for services. These different types of requests place different demands on the facilities/capabilities and resources at the locations. It may therefore be difficult to predict how to arrange the available resources, facilities and capabilities at any each location to provide the most efficient request processing.

To further exacerbate this problem, there may be a need to process very large numbers of requests each of potentially a different type. In this circumstance the unpredictability associated with the processing of single requests becomes further complicated not least by the potential interrelationship between requests, and throughput and demand volume issues.

Some embodiments relate to methods and apparatus which aim to address these and related problems. For example, an embodiment provides a computer implemented method and apparatus for use in routing request messages based on request processing capabilities at the available destinations for those request messages. In one such embodiment there is provided a computer implemented method of controlling processing of network messages, the method comprising:
receiving a network message comprising request data to be processed at any one of a plurality of destinations in a geographic area;
selecting one of the plurality of destinations, wherein selecting comprises obtaining a model of request processing at each of the plurality of destinations and applying the model to the request data to determine a response metric for each destination, and selecting the destination based on its response metric;
forwarding the network message to the selected destination; and,
receiving in response to the network message an observed response metric associated with processing of the request at the selected destination.

The models may be statistical - e.g. they may be based on observed data, which may be expressed numerically as a point cloud, and/or in terms of statistical moments such as measures of central tendency (e.g. mean, and median) and spread (e.g. variance and standard deviation), or analytically e.g. as a mathematical relationship between request processing parameters and response metrics. Any such predictor may be used.

Obtaining a model of request processing may comprise retrieving such a model from memory. Obtaining a model may comprise determining the model based on request messages processed by a destination and the response metrics observed as a result of processing of each request. In some embodiments obtaining the model may comprise retrieving a stored model and updating the stored model based on request messages processed by a destination and the response metrics observed as a result of processing of each request. For example, in some embodiments this method may also comprise storing a plurality of items of request data and a plurality of observed response metrics, wherein each observed response metric is associated with a corresponding one of the plurality of items of request data. The model may be determined by fitting the response metrics for each destination to the request data. This fitting may be done by regression (e.g. linear regression), or by data clustering. Other machine learning methods may be used to determine the models.

A response metric may comprise a response latency or delay time associated with the completion of request processing, such as a defined intermediate stage of completion of request processing. For example a first response latency may be associated with the dispatch of a requested article from a destination, and a second response latency may be associated with the arrival of an article at a requesting client's location. These may be indicated by the transmission of a notification message from at least one of the GPS enabled device and the destination.

Each destination is typically associated with a plurality of parameters which may describe at least one of a request processing facility, a request processing capability, and request processing resource at the location. Examples of request processing facilities may comprise items of hardware for producing articles (such as processing hardware and machinery). An example of a request processing resource parameter may comprise a staffing level. A staffing level parameter may comprise a numeric indicator of at least one type of personnel available at a destination - for example a number of article preparation personnel, and delivery personnel. In the context of prepared food delivery, types of article preparation personnel may comprise types of chefs, sous chefs, and cleaners. In the context of retail product delivery types of article preparation personnel may comprise warehouse pickers and dispatchers. As another example, a request processing parameter may comprise a numeric indicator of a number of delivery personnel associated with a destination - such as delivery car drivers, motor cycle couriers, and bicycle couriers. Request processing capability may comprise the geographic location and/or the operating time schedule of the destination (its opening times), and the resting locations of delivery personnel.

These are just examples of parameters which can be taken into account by the models, and other parameters may be taken into account in the model such as weather conditions, and traffic conditions in geographic areas associated with the destinations.

A plurality of these models can be provided, one for each of a plurality of destinations.

The method may comprise identifying a group of destinations and determining based on the models associated with the destinations in the group, an indication of how varying a parameter of request processing at a selected destination of that group varies the response metric performance for that selected destination. For example, this may comprise identifying, within the group, a relationship between a particular request processing parameter and a particular response metric. To determine the effect of varying the particular request processing parameter at the selected destination, response metric data associated with other destinations of that group may be used. This effect may be determined by any process of estimation based on the models associated with the group of destinations - examples include identifying the group based on data clustering (e.g. those models having at least one first request processing parameter within a selected range), and then determining a relationship between a second request processing parameter and a response metric. This may be determined based on the models associated with destinations in the group by fitting, extrapolation, interpolation or other methods of estimation within the group.

The methods of the present disclosure may comprise modifying the model associated with one of the destinations. This may be done by modifying one of the request processing parameters in the model, and using a relationship (e.g. determined as described above) between that parameter and the response metric to establish a new, predicted, model including this modification. The method may further comprise this modified statistical model to one or more stored items of request data to determine a modified response metric for those items of request data.

A command message may then be sent to one of the destinations to control request processing at the destination, wherein the command message is based on at least one of:
(a) the modified response metric; and
(b) a comparison between the observed response metric and the modified response metric.

The command message may comprise a command to adapt request processing at the destination based on the adjusted parameter. For example, the command message may be configured to trigger an action at the destination, for example it may cause an activation message to be sent to a GPS enabled device carried by delivery personnel. The activation message may create an association between that GPS enabled device and the destination so that future requests for service at the destination can be forwarded to that device (e.g. directly from the server, or by an auto-forwarding process at the destination).

Modifying the model associated with one of the destinations may comprise adjusting a parameter of the model associated with a first destination and determining, based on the model(s) associated with at least one other destination, the effect of that adjustment. The at least one other destination may belong to a group of destinations which includes the first destination. The group may be identified as described above or based on some other identifier such as a type identifier.

The command message may comprise a command to modify request processing at the destination to reflect the adjusted parameter.

The modification may be selected based on input data received from a user interface, such as a three dimensional positional tracking virtual reality environment. Accordingly, the method may comprise displaying, in a three dimensional positional tracking virtual reality environment, a graphical representation of the plurality of destinations in the geographic area. In embodiments the first destination (e.g. the destination at which the modification is to be performed) may be selected based on the input data. In some embodiments the group of destinations may be selected in the same way. The method may comprise displaying, in the user interface, and indication of selected parameters of the request processing model the first destination.

The method may comprise determining an amount of the spread (e.g. the variance) in a response metric from the destination which is associated with each of the parameters of the model. This may be determined using an analysis of variance (ANOVA) approach, or any other way of determining the degree of variability in a response metric which is associated with each of the parameters of the model. The method may comprise selecting a subset (e.g. less than all) of the parameters for display, for example those parameters which provide the largest contribution(s) to the variance may be selected for display in the user interface. A selected number of the parameters may thus be presented at the user interface.

This can enable a human user to provide input data to control these parameters of the model by manipulation of the interface. For example, this may be done by the manipulation of a graphical representation of the parameters in a three dimensional positional tracking virtual reality environment. The method may comprise modifying the model associated with the identified destination based on the input data. This may be done by adjusting a parameter of the model associated with request processing at the identified destination.

In some embodiments, variations in the model parameters may be selected automatically, for example the method may comprise automatically adjusting those parameters associated with the greatest amount of variance in the response metric. Once the model has been modified, whether based on user input or based on an automatic selection, the method may comprise determining the effect of the modification by operating the model on one or more items of stored request data (e.g. associated with previous requests for which processing has been completed and an observed response metric stored in memory). This can enable the response metric predicted by the modified model to be compared with an observed response metric. An indication of the comparison between the observed response metric and the modified response metric may be provided via the user interface.

The method may comprise determining, based on the comparison, whether to send a command message to the destination to cause the change in request processing at the destination. The destination device may be configured to respond to the command message with an indication of whether the change in request processing is to be implemented. The method may also comprise routing the request message based on at least one of: the command message, the comparison, and the destination's response to the command message.

In an embodiment the present disclosure also provides a computer implemented method of selecting a destination for a network message for routing the network message to a communications device at the destination. The method comprises: receiving a network message comprising request data to be processed at any one of a plurality of destinations in a geographic area; selecting one of the plurality of destinations, wherein selecting comprises obtaining a model of request processing at each of the plurality of destinations and applying the model to the request data to determine a response metric for each destination, and selecting the destination based on its response metric; and forwarding the network message to the selected destination.

The method may also comprise receiving, in response to the network message an observed response metric associated with processing of the request at the selected destination. The method may comprise storing a plurality of items of request data and a plurality of observed response metrics, wherein each observed response metric is associated with a corresponding one of the plurality of items of request data.

The method may further comprise sending a command message to one of the destinations to control request processing at the destination, wherein the command message comprises a command to modify request processing at the destination - e.g. to change request processing at the destination according to change in a parameter of the corresponding model.

The destination comprise a communications device configured to respond to the command message with an acknowledgement message indicating that the change has been implemented, and the method may comprise responding to this acknowledgement message by modifying the model associated with that destination to reflect the change caused by the command message. Subsequently, a further network message may be received comprising request data to be processed at any one of the plurality of destinations. The method comprises applying the modified model to the request data to determine a modified response metric for that destination (in addition perhaps to response metrics for other destinations according to the current state of models for those destinations). A destination may then be selected for the message based on the modified response metric, for example based on comparing the modified response metric to the response metric generated for other destinations. The network message can then be forwarded to the selected destination. For example, the method may comprise determining a response metric for each of the plurality of destinations, wherein selecting the destination based on the modified response metric comprises comparing the modified response metric with a response metric of at least one other destination.

The response metrics referred to herein may comprise at least one of: a primary response latency, indicating a delay time between receipt of a request message and transmission of a response message from the destination; and a secondary response latency, indicating a delay time between transmission of a response message from the destination and transmission of a confirmation message from a third device associated with the destination. The third device associated with the location may comprise a GPS enabled device. The models referred to herein may comprise a predictor configured to predict at least one of the primary response latency and the secondary response latency based on a parameter of request processing at the destination and based on the content of a request message.

The predictor may be based on stored items of request data and corresponding observed response metrics. These metrics may be obtained from other destinations, for example destinations in the same group. The group may be identified as described elsewhere herein.

In addition to the control of resources and capabilities at the request destinations, the methods of the present disclosure may be adapted to control the deployment of resources (such as delivery personnel or delivery drones) from those destinations.

For example, the delivery personnel or drones may carry GPS enabled devices which are adapted to communicate, over a wireless network such as a telecommunications network, with a communications device included in a destination. These devices may be used to provide route guidance to the delivery personnel, or indeed to control navigation of drones. In one such embodiment there is provided a method of providing a route to a portable GPS enabled devices. The method comprises: displaying a graphical representation of a routing preference as a trajectory through a graphical representation of a geographic area in which the routing preference is to be applied, modifying the routing preference based on a user manipulation of the trajectory, wherein the user manipulation causes movement of the trajectory in the graphical representation of the geographic area; receiving a navigation request for a route to a destination from a current location of a GPS enabled device, wherein the route passes through the geographic area; determining the route based on the current location of the GPS enabled device and the modified routing preference; and providing the route for communication to the GPS enabled device. This may comprise transmitting the route across a wide area network to the GPS enabled device to enable the GPS enabled device to guide the delivery personnel or drone through the geographic area according to the routing preference.

Modifying the routing preference may comprise receiving input data from a human user, for example using a 3D position tracking virtual reality environment. This may be configured to represent the routing preference as a trajectory (a general indication of path) in a graphical representation of the geographic area. This may be a 3D representation.

Prior to the modifying of the routing preference, the method may comprise storing a plurality of navigation requests and a plurality of routes, wherein each route is associated with a corresponding one of the plurality of navigation requests. Based on these stored navigation requests and the modified routing preference a plurality of modified routes can be provided wherein each modified route is associated with a corresponding one of the plurality of navigation requests. A graphical representation of the transit of the GPS enabled device along the routes can then be played back in the 3D position tracking virtual reality environment to enable the user to visualise the completion of historical requests under the control of this modified routing preference. In addition, or as an alternative, one or more simulated response metrics may be generated (such as the response latencies described above) taking into account this modified routing preference. For example, the model of request processing at the destination may be updated to take account of the modified routing preference, and the model may be applied to request message data associated with these navigation requests to map the change in routing preference on to a change in response performance according to these metrics. Thus, in addition to playing back a graphical representation of the modified routes, the VR environment may be used to provide a quantitative indication of the associated request processing performance.

In an aspect, there is provided a method of selecting a destination for a network message for routing the network message to a communications device at the destination. The method comprising: receiving a network message comprising request data to be processed at any one of a plurality of destinations in a geographic area; selecting one of the plurality of destinations; wherein selecting comprises obtaining a statistical model of request processing at each of the plurality of destinations and applying the statistical model to the request data to determine a response metric for each destination, and selecting the destination based on its response metric; forwarding the network message to the selected destination, and receiving in response to the network message an observed response metric associated with processing of the request at the selected destination; storing a plurality of items of request data and a plurality of observed response metrics, wherein each observed response metric is associated with a corresponding one of the plurality of items of request data; and sending a command message to one of the destinations to control request processing at the destination, wherein the command message comprises a parameter of request processing at the destination. The method comprising: modifying the statistical model associated with one of the destinations based on the command message, and receiving a further network message comprising request data to be processed at any one of the plurality of destinations; applying the modified statistical model to the request data to determine a modified response metric, and selecting a destination based on the modified response metric; forwarding the network message to the selected destination.

In embodiments, the method further comprises determining a response metric for each of the plurality of destinations, wherein selecting the destination based on the modified response metric comprises comparing the modified response metric with a response metric of at least one other destination. In embodiments, modifying comprises adjusting a parameter of the statistical model associated with a destination, and the command message comprises a command to modify request processing at the destination to reflect the adjusted parameter. In embodiments, the method comprises: displaying, in a three dimensional positional tracking virtual reality environment, a graphical representation of the plurality of destinations in the geographic area; and obtaining input data based on a user manipulation in said environment; wherein modifying the statistical model comprises modifying the statistical model based on the input data.

In embodiments, the request data comprises at least one of: a delivery location; items to be delivered to the delivery location; and an order value. In embodiments, the response metric comprises at least one of: a primary response latency, indicating a delay time between receipt of a request message and transmission of a response message from the destination; and a secondary response latency, indicating a delay time between transmission of a response message from the destination and transmission of a confirmation message from a third device associated with the destination.

In embodiments, the statistical model comprises a predictor configured to predict at least one of the primary response latency and the secondary response latency based on a parameter of request processing at the destination. In embodiments, the predictor is based on stored items of request data and corresponding observed response metrics. In embodiments, the parameter of request processing at the destination comprises at least one of: staffing levels; time of day; weather conditions; traffic conditions.

In an aspect, there is provided a method of providing a route to a plurality of portable GPS enabled devices, the method comprising: displaying a graphical representation of a routing preference as a trajectory through a graphical representation of a geographic area in which the routing preference is to be applied, modifying the routing preference based on a user manipulation of the trajectory, wherein the user manipulation causes movement of the trajectory in the graphical representation of the geographic area; receiving a navigation request for a route to a destination from a current location of a GPS enabled device, wherein the route passes through the geographic area; determining the route based on the current location of the GPS enabled device and the modified routing preference; providing the route for communication to the GPS enabled device.

In embodiments, the method comprises prior to the modifying of the routing preference, storing a plurality of navigation requests and a plurality of routes, wherein each route is associated with a corresponding one of the plurality of navigation requests; and determining, based on the stored navigation requests and the modified routing preference, a plurality of modified routes wherein each modified route is associated with a corresponding one of the plurality of navigation requests.

In embodiments, the method comprises playing back a graphical representation of the modified routes. In embodiments, the trajectory comprises a path through the geographic area. In embodiments, the navigation request comprises at least one of: a current location; and an end location. In embodiments, providing the route to the GPS enabled device comprises transmitting data comprising the route from a server to the GPS enabled device over a wide area network. In embodiments, user manipulation of the route comprises the user operating a hand-held controller. In embodiments, displaying a graphical representation of the routing preference comprises providing said graphical representation in a three dimensional positional tracking virtual reality environment.

Some embodiments of the disclosure provide computer program products, and computer readable media, such as tangible non-transitory media, storing instructions to program a processor to perform any one or more of the methods described herein.

### Brief Description of Drawings

Embodiments of the disclosure will now be described, by way of example only, with reference to the accompanying drawings in which:
Figure 1 shows a schematic view of the system.
Figure 2 shows an example Virtual Reality environment and set-up.
Figure 3 shows an example of a modified routing preference.
Figures 4-6 show timing diagrams for different embodiments of the disclosure.

In the drawings like reference numerals are used to indicate like elements.

### Specific Description

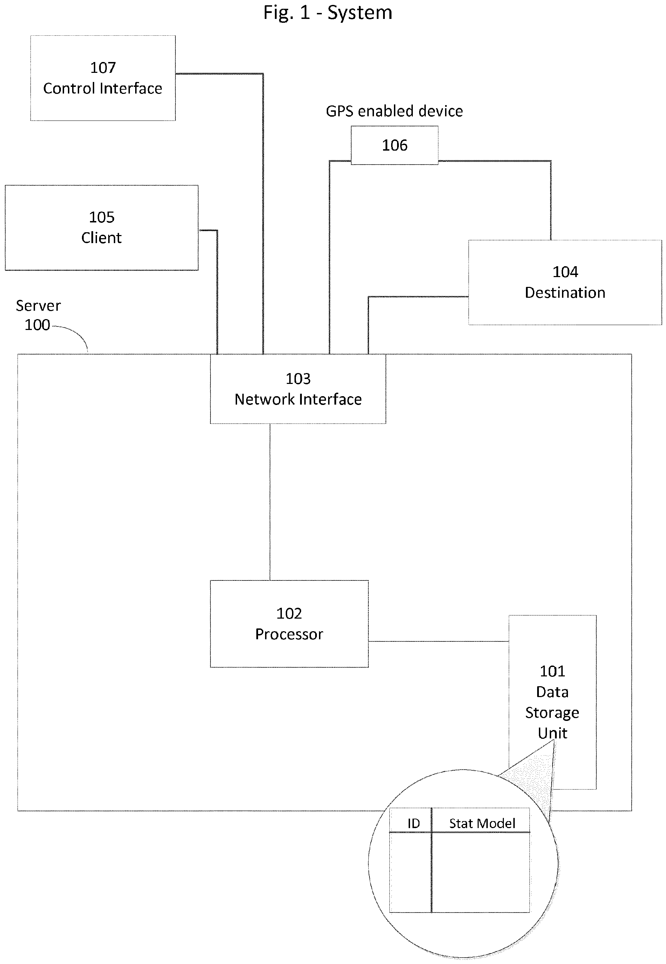

Figure 1 illustrates an apparatus for improving data forwarding and data processing in a network.

In a computer or telecommunications network, a server receives a request from a client and selects one of a plurality of destinations for that message before forwarding the message across the network to that destination. The server stores an association which links a statistical model to each destination. The models describe how each destination processes requests using a response metric (such as a response latency or delay time). For any given request, a processor in the server uses the models to predict the response metric associated with each destination. In some embodiments the server can use these response metrics to select the destination to which a request message is to be sent (e.g. to control the routing of the request message).

Each of these models may comprise parameters which describe the request processing capabilities at each destination. In some embodiments the server may comprise a control interface adapted to allow a user to alter one or more of these parameters. The control interface may be configured to provide a simulation of the effects that these changes would have on the destination's request processing capabilities. This may be provided using a VR environment such as a 3D position tracking virtual reality environment.

Depending on the outcome of this simulation, a command message can be sent to the destination to change its request processing capabilities.

Figure 1 shows a network of apparatus comprising a server 100, a destination 104, a client 105, a global positioning system (GPS) enabled device 106 and a control interface 107.

The server is operable to communicate with a plurality destinations such as destination 104, a plurality of clients 105, a plurality of GPS enabled devices 106, and a control interface 107; and the GPS enabled devices 106 are also operable to communicate with the destinations 104. These components may communicate with one another as nodes over a communication network. This network may be a packet-switched network which is configured such that data is sent as packets from the network interface of one node to that of another over a wide area network, for example the internet. In other embodiments of the disclosure other types of network may be used.

The server comprises a data storage unit 101, a processor 102 and a network interface 103.

Stored in the data storage unit 101 is a list of identification data, with each data item on the list identifying a particular destination. Also stored in the data storage unit 101 with each destination identifier is a statistical model associated with each destination. The data storage unit is configured to send and receive data to and from the processor 102, and the processor is also configured to send and receive data to and from the network interface 103.

The network interface 103 is operable to transmit and receive data to and from hosts outside the server, for example a client 105, a destination 104 and a GPS enabled device 106. The network interface 103 of the server is configured receive network messages comprising request data from a client 105 and transmit this request data to a destination 104. Said request data comprises at least one of: a delivery location, a list of one or more items to be delivered to said delivery location, and an order value based on the items to be delivered.

The processor 102 is configured to apply the statistical models for each of the destinations stored in the data storage unit to the incoming request data from the network interface, to provide a response metric. Said response metric comprises: a primary response latency - which may be an indication of the delay time between the destination receiving a request message and the destination sending a response message, and a secondary response latency - which may be an indication of the delay time between the transmission of the response message and the transmission of a confirmation message from a third device associated with the destination. The statistical model comprises a predictor to predict the primary and/or secondary response latencies, based on parameters of request processing. For example, these parameters may comprise: staffing levels, time of day, weather conditions and traffic conditions. The statistical model is operable to predict these response latencies using linear modelling, wherein the said parameters are fed into the model and fitted to a line built up from the processing of previous request data, where response latencies for a particular set of parameters were observed and recorded. Given the parameters of the model, the processor 102 is therefore operable use the model to calculate expected primary and secondary response latencies and output a response metric. In other embodiments other modelling techniques may be used.

The processor 102 of the embodiments described herein may be implemented using controllers and/or processors which may be provided by fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Destinations 104, Clients 105, GPS enabled devices 106 and the Control Interface 107 each comprise such a processor.

A destination 104 comprises its own network interface which is operable to receive requests, and a processor. The destination is operable to process the request, and is configured to determine response metric data based on how requests are processed at the destination. Specifically the destination is configured to measure the time between receipt of a request message from the server 100 and transmission of a response message to the server 100 so as to provide the primary response latency. The destination is also configured to measure the time between transmission of said response message and transmission of a confirmation message from a third device associated with the destination, for example a GPS enabled device 106, so as to provide the secondary response latency. The destination is also configured to transmit the response metric data back to the server from its network interface.

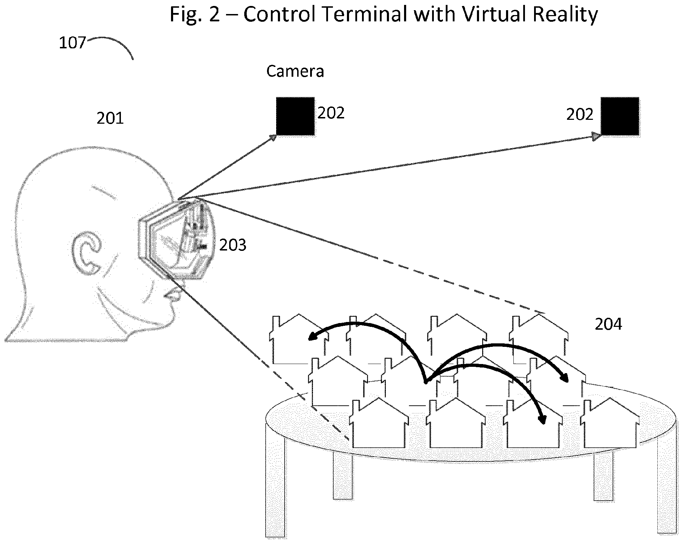

The control interface 107 comprises a network interface configured to receive and transmit data to and from the server 100. With reference to Figure 2, the control interface is operable to display a graphical representation of data to a user 201, for example as a 3-dimensional virtual reality environment 204. The control interface comprises a virtual reality headset 203 configured to be worn by a user 201, and cameras 202 which are operable to track user 201. The headset and cameras are configured to enable the user 201 to view and interact with the virtual reality environment 204. The control terminal also comprises a hand-held controller which is configured to enable a user to manipulate data in the virtual reality environment.

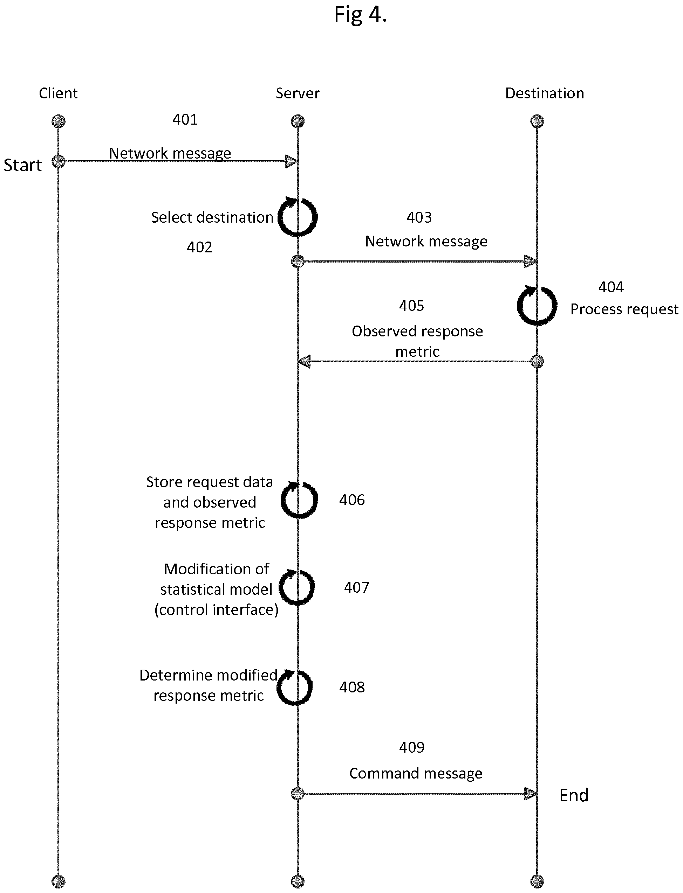

With reference now also to Figure 4, in operation the network interface 103 receives a network message (401) comprising request data sent from a client 105, for example over the internet. The network message is passed to the processor 102, which determines a response metric for each destination by operating the statistical models associated with each destination on the request data contained in the network message as described above. Specifically each of these models is retrieved from memory (i.e. from the data storage unit 101) and is sequentially applied by the processor to the request data contained in the network message to obtain a response metric for each of the destinations. Based on these response metrics the processor 102 selects (402) one of the destinations 104. The network message and the destination selection information are passed to the network interface 103, where the network message is forwarded (403) from the server 100 to the selected destination 104 over a wide area network.

At the destination 104, the network message is received at its network interface. The request data comprised in the network message is then processed (404). Processing of the request comprises: receiving a request message, preparing at the destination particular items that are requested in the request message, transmitting the delivery location contained in the request to at least one GPS enabled device, the GPS enabled device collecting the prepared items from the destination and delivering them to the delivery location. A response message is transmitted from the destination when the GPS enabled device collects the prepared items from the destination, with a primary response latency measured as the time between the initial receipt of the request message and this response being transmitted. The GPS enabled device transmits a confirmation message upon delivery of the items to the delivery location with the secondary response latency being measured as the time between the response message being transmitted from the destination when the GPS enable device collects the prepared items and the transmission of this confirmation message from the GPS enabled device upon delivery of the items.

Based on these two response latencies, an observed response metric is determined as a measure of how well the destination processed the request, and the response metric is transmitted (405) from the destination 104 back to the server 100, where it is received at the network interface 103.

Each time that request data from a client 105 and the corresponding observed response metric from a destination 104 are received, it is stored (406) in the data storage unit 101. This data is used to update the statistical model associated with each destination so that the predicted response metrics for future requests from a client are more accurate. For example, the observed response metric data adjusts the line of the linear model that the statistical model uses to determine response metrics for future requests.

The model may be determined by the processor 102 fitting the response metrics for each destination to the request data. In one example this fitting may be done by regression, e.g. linear regression. In this case new observed response metric data that is received at the network interface of the server from a destination after request has been processed is fed to the processor 102 which may adjust the line of the linear model that the statistical model uses to determine response metrics for requests in future. Data clustering and other machine learning methods may be used to determine the models.

Data stored in the server 100 is transmitted to the control interface 107 where a graphical representation of the destinations stored in the server is displayed to a user as a three dimensional positional tracking virtual reality environment. As illustrated in Figure 2, the user 201 puts on a virtual reality headset 203 and is tracked by cameras 202 in order to view and interact with the virtual reality environment. As Figure 2 illustrates, the graphical representation is a map of a geographic area, with the locations of destinations displayed.

The user 201 then modifies (407) the statistical model associated with a destination. This modification of the statistical model comprises adjusting parameters that the statistical model uses as inputs (e.g. number of active GPS enabled device, number of available item preparers, time of day, available external user interface items, the value of each item, weather conditions and traffic conditions). The user may change these statistical model input parameters whilst viewing the virtual reality environment, e.g. by using a hand-held controller. Once the parameters have been manipulated, the model data stored in the data storage unit is updated, and the processor operates the statistical model to determine a new modified response metric for a given request at the destination. This modified response metric can then compared to the original observed response metric for the particular destination (408); for example by both the observed metric and modified metric being displayed to the user inside the virtual reality environment.

In addition, the model associated with a particular destination may be adjusted using data from the models of others of the plurality of destinations that are operable to communicate with the server. For example, the effect on the response metric determined by a processor of varying a parameter or set of parameters of request processing to a certain set of values may be unknown and not calculable by the model of the particular destination. This may arise when the model associated with the particular destination has not encountered parameters in that range when processing previous requests. In this case data from other destinations' statistical models may be inputted from the data storage unit 101 to the processor 102 and combined with the particular destination's model in order to determine a response metric for the particular destination with the adjusted set of parameters. For example, the processor may identify a group of statistical models stored in the data storage unit that have at least one first request processing parameter within a selected range. From this identified group of models the processor determines a relationship between these models and the model associated with the particular destination. The processor then, using the adjusted set of parameters of the particular destination, estimates a modified response metric for the particular destination using data from the model of the particular destination and data from models of the destinations in the selected group. To obtain this estimated response metric, the processor may use fitting, extrapolation, interpolation or other methods of estimation within the group.

Based on the modified response metric, and/or the comparison with the observed response metric, a command message is sent (409) from the server 100 to the destination 104 whose statistical model has been modified. This command message controls how requests at the destination are processed in future by comprising a command to adjust the request processing parameter(s) as they were adjusted by the user in the graphical representation. These command messages comprise instructions for a controller to change various parameters at the destination associated with request processing, for example: the number of active GPS enabled device, the number of available item preparers, the available external user interface items and the value of each of said items. Therefore, when a network message comprising a request is sent in future, it is processed at the destination with the destination having these updated parameters. This changes and preferably reduces the primary and secondary response latencies associated with the request giving an improved observed response metric.

In one embodiment the command message may trigger an activation message to be transmitted from the network interface of the destination to the network interface of a GPS enabled device. This may be processed by the GPS enabled device to create an association between the GPS enabled device and the destination. The GPS enabled device is thus configured so that future requests from a client to the server are forwarded to that device. In some embodiments a request message may be sent directly from server 100 to GPS enabled device 106, and in others the server 100 transmits a request to the associated destination 104 where it is auto-forwarded to the GPS enabled device 106.

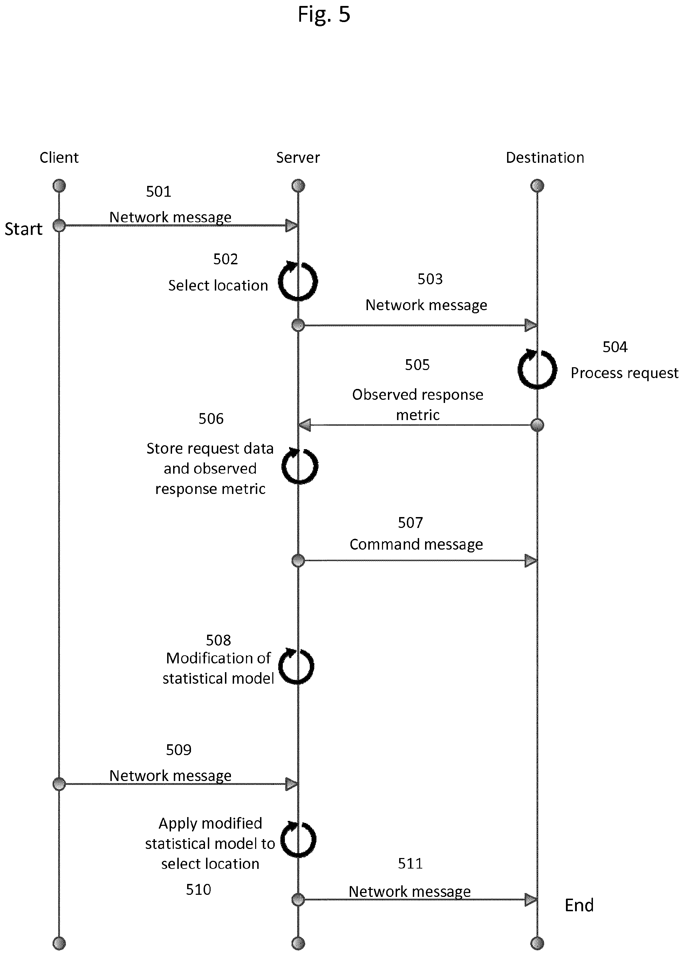

With reference now also to Figure 5, in another embodiment the statistical model of a destination is built and modified in the same way as is outlined for the embodiment described above. A command message comprising updated request processing parameters, for example: the number of active GPS enabled device, the number of available item preparers, the available external user interface items and the value of each of said items is sent (507) to the destination to control and alter how future requests are processed.

In this embodiment the statistical model is updated/modified (508) based on the updated parameters contained in the command message. When new network messages comprising request data, are received (509) by the server, the processer 102 applies the statistical model associated with each destination to the request, including the modified statistical model of the destination whose model has been updated. Therefore, the modified response metric of the destination can be compared with the response metrics of the other destinations in order to determine which destination to forward the network message to (510). If it is determined that the destination whose model has been modified has a superior response metric, then the incoming network message will then be forwarded (511) from the server 100 to this destination 104.

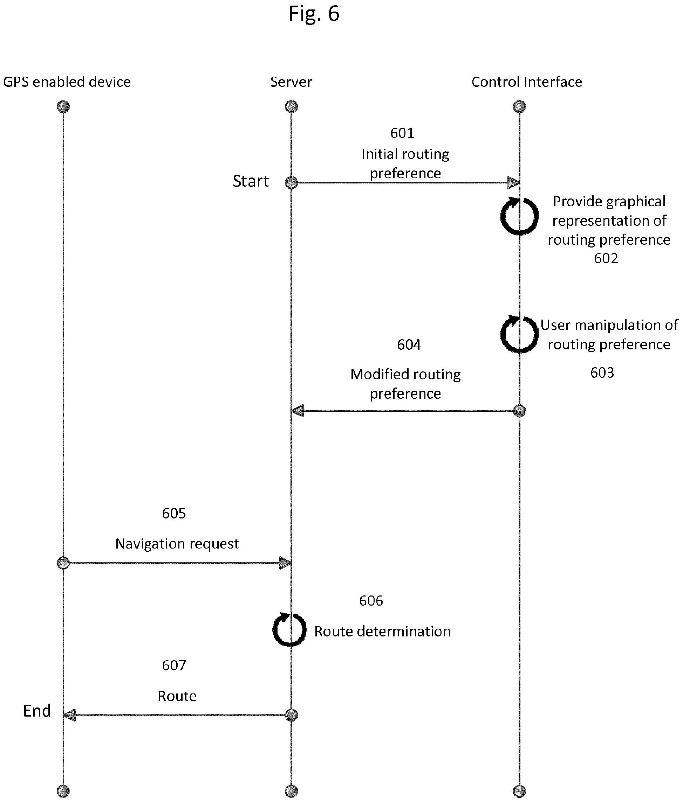

With reference to Figure 6, in another mode of operation, the disclosure provides a route to a GPS enabled device 106. In this mode, an initial routing preference (a preferred path between one location and another) is transmitted (601) from the server 100 to the control interface 107. For example this initial routing preference may be stored as a file in the data storage unit 101, to provide information for GPS enabled devices on which route to travel from one location to another. This file may be transmitted from the network interface of the server to the network interface of the control interface where it is passed to the processor of the control interface.

The control interface provides (602) a graphical representation of a routing preference, which is displayed to the user as a trajectory through a geographic area. Specifically the control interface's processor combines the initial routing preference data it has received with data representing a map of an area in order to render a visual representation comprising a map of a geographical area (such as a city) in three dimensions, with a trajectory indicating the routing preference overlaid on top of it.

Specifically this visualisation is displayed to a user within the three-dimensional positional tracking virtual reality environment. As in other embodiments, and as illustrated in Figure 2, the user 201 puts on a virtual reality headset 203 and is tracked by cameras 202 in order to view and interact with the virtual reality environment.

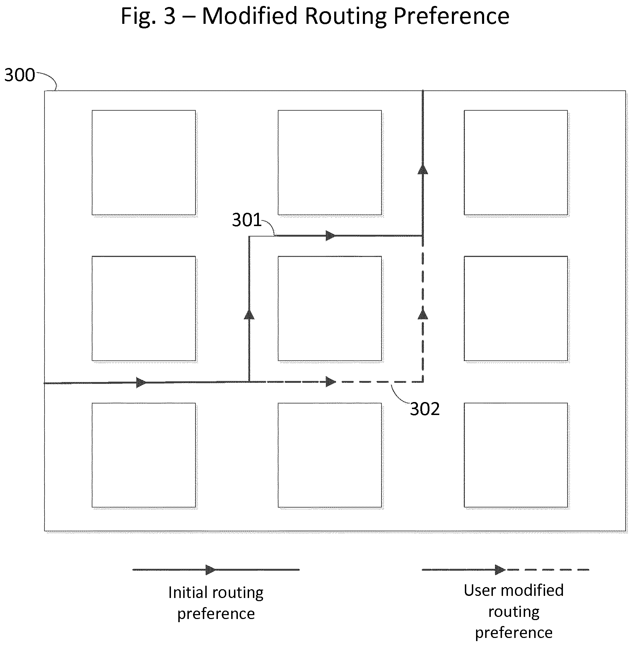

The user may then manipulate (603) the trajectory in the virtual reality environment. When wearing the headset and holding the hand-held controller, the user may operate the controller to alter the trajectory that indicates the routing preference in the virtual reality environment, for example around an obstacle, thus modifying the routing preference. When the controller is operated it sends a signal to the processor to modify the routing preference in real time so that the visualisation is re-rendered with the new routing preference overlaid on the map. In the example illustrated in Figure 3, an initial routing preference 301 through a geographic area 300 may be modified to provide a new, modified routing preference 302. The modified routing preference is then transmitted back to the server where the routing preference file stored in the data storage unit is updated.

At some point in time a GPS enabled device may transmit (605) a navigation request from its network interface. This is a request to be provided with a route from one location, such as the device's current location, to another, such as a delivery location. If such a route passes through the geographic area that the routing preference is provided for, the processor determines a route (606) based on the modified routing preference and the current location of the device. This route is then provided (607) to the network interface to be transmitted to the GPS enabled device over the network. This new routing preference may enable a shorter journey time for a GPS enabled device travelling from a destination to a delivery location or from its current location to a destination. Therefore the modified routing preference may provide an improved response metric as it reduces the secondary response latency.

The navigation requests received from a GPS enabled device and the corresponding route provided to the device are stored in the data storage unit. To provide feedback to a user about the effect of a change to the routing preference, the processor may retrieve stored navigation requests from the data storage unit, and use the modified routing preference to determine a modified route for each of these stored navigation requests. This can be used to determine the effect of implementation of the modified routing preference. A graphical representation of the routes travelled by GPS device both before and after the implementation of the modified routing preference may be played to the user in the three-dimensional positional tracking virtual reality environment.

With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit. It is suggested that any feature of any one of the examples disclosed herein may be combined with any selected features of any of the other examples described herein. For example, features of methods may be implemented in suitably configured hardware, and the configuration of the specific hardware described herein may be employed in methods implemented using other hardware.

Other variations and modifications of the apparatus will be apparent to persons of skill in the art in the context of the present disclosure. For example it will be appreciated that although the network is described as a packet-switched network, it could take any other form, for example a circuit-switched network. Likewise, although the statistical model is described above as determining response metrics based on linear regression modelling, other modelling techniques are possible for example Monte Carlo simulations or any other modelling algorithm.

Aspects of the present disclosure may address a technical problem of increasing efficiency of processing data requests in a network comprising multiple data nodes. For instance, this may be the case in systems comprising a central server which can control communication within the network so that incoming network messages (e.g. comprising requests) are received by the server and distributed to the nodes of the network. By monitoring the distribution of these requests, and the processing of them by the respective nodes of the network system, the server may be able to obtain and modify statistical models which represent the ability of each node of the network to process data requests. Based on such models, the server may be able to modify the models and identify possible modifications to individual network nodes which may impact the ability of said nodes to process data requests. By identifying possible modifications to individual nodes which improve the ability to process requests, the server may be able to increase the ability of both the individual nodes and the network as a whole to process data requests.

The processing of data requests may comprise the production and delivery of a commodity, such as energy, in a network. Adjustments to the statistical models may correspond to changes in processing capability of a facility (such as a network node), e.g. the ability to manufacture the commodity. It is to be appreciated that this may extend to a variety of different commodities, such as energy, oil and gas, manufactured goods and perishables. For a commodity such as energy, each data node may represent a power plant, and there may be a plurality of different types of power plant (e.g. combustion of different types of fossil fuels, wind, nuclear or solar). The processing of data requests at a power plant includes the production of energy, and this production may be modelled statistically. For instance, the processing of requests (i.e. the production of energy) at a node may be dependent on many input parameters, such as the amount of resources needed (e.g. volumes of raw materials, or staff required to be present), and these parameters could be represented in the statistical model.

In a given network, such as a region supplied by one power grid, there may be a central server (e.g. a control facility) which controls operation of the various network nodes (power plants) to produce energy. Energy production from each power plant may vary according to different input parameters which dictate its energy output (i.e. its request processing capabilities). In response to receiving an incoming network message (e.g. a particular energy demand for a region), a node, or collection of nodes may be selected which are responsible for processing said request (i.e. for generating the request). By obtaining and modifying statistical models of commodity output for each network node (i.e. power plant), methods of the present disclosure may be able to determine how each node would respond in relation to a modification in its output (e.g. providing more coal to a furnace). The results of such a modification could be communicated from the central server (i.e. control centre) to the relevant data nodes (i.e. power plants) in a command message to control the use of resources in the network to provide a more efficient way of using the network as a whole to respond to the data request. That is, by identifying modifications that could be made at each individual network node, which would provide the processing capabilities for processing the data request. A machine learning element may also be provided based on the updates to any statistical models to more closely reflect the outcome of implementing any modifications to the network nodes.

The processing of data requests for controlling production and delivery of commodities in a network may extend to multiple other commodities. For instance, each data node may represent a retail outlet such as a takeaway restaurant, and the network may include multiple takeaway restaurants. In this context, processing data requests may comprise the cooking and delivering items of food. Each network node (i.e. takeaway restaurant) may be modelled statistically, i.e. to represent variations in commodity production (output to a resource) based on input parameters, such as number of staff available or number of delivery drivers working. The central server may modify these models to determine estimates for the processing of data requests from each network nodes if these input parameters were changed. The central server may communicate the outcome from these models to the relevant network nodes (i.e. takeaway restaurants). The network nodes may then modify their input parameters (e.g. number of staff present) to increase efficiency of commodity production and delivery throughout the network.

Aspects of the present disclosure may address a technical problem of routing communications to control the flow of information in a network between a central server and a plurality of destinations. For instance, this may be to control the operation of facilities in the network to process requests from devices external to the network. Aspects may address technical problems in which there is a plurality of different sources of a given resource, and wherein methods are provided for responding to a request for said given resource. The methods may be configured to determine which of the plurality of sources should be used to respond to the request.

It is to be appreciated that a plurality of situations exist in which multiple sources exist which could be used to deliver an item to a user, and wherein a central server is used to determine which source should be selected. For instance, communications may be routed in a content delivery network ('CDN') where there is a plurality of destinations (e.g. geographically distributed proxy servers each having its own data centre) where each destination has a copy of the resource (i.e. the data stored in the data centre).The central server may receive a request for said data from a user in a first geographic location. The central server may process the request and use statistical models to determine from which data node, i.e. proxy server and its respective data store, the data in the request should be retrieved from, and thus to which network node should the communication be forwarded. This may be based on use of statistical models to process request data, such as the user's location. Statistical modelling may also be used to determine a more efficient allocation of resources in the network (i.e. which proxy servers should store which items of data and/or where data storage resources should be concentrated) to provide improved network coverage for the retrieval of data.

Operation of machinery in a warehouse or production line may represent a situation in which multiple sources exist which could be used to produce an item. For instance, there may be a plurality of different network nodes (i.e. items of machinery), wherein each network node is associated with a statistical model representing data processing capabilities of that network node (i.e. item of machinery) in response to specific input parameters. The different items of machinery may produce output which contributes component parts for a complex product to be assembled, so that by modifying the allocation of resources to each network node, different outcomes may be present in terms of overall production of items of the complex product. Such a manufacturing process may be controlled to provide an efficient allocation of resources to the individual items of machinery in response to processing a request for e.g. a complex product. For instance, by determining modified response metrics for individual items of machinery in the warehouse, the method of controlling machinery output may enable the provision of a more efficient production line or warehouse, as more efficient production/machinery usage patterns can be identified in response to processing a network request

Controlling order requests for items which could be delivered to a user at a final location from any of a plurality of different initial locations represents a situation in which communications may be routed between a central server and a plurality of network nodes. For instance, where a data request is processed at the central server, which may be addressed by delivery from any one of the plurality of different initial locations, the central server may be configured to determine the most efficient way of processing that request. This may involve using statistical models to identify which initial location could process the request and deliver the items to the final location in a more efficient manner. For instance, this may enable an identification of the quickest way possible, or it may enable a more efficient overall delivery pattern when considering multiple different orders for multiple different locations.

In embodiments of the disclosure, the methods and apparatus described herein may be used to control request processing of request messages associated with the delivery of consumer articles such as perishables (which may comprise food and drink) from destinations selected for the request processing to a location specified by the request message. This delivery may be accompanied by the verification data produced by the second device. This may address the technical problem of how to provide food delivery in a facility without the need for waiting staff. The disclosure may also address the problem of how to reduce the risk of financial loss due to theft or error and/or how to relieve burden on waiting staff in a facility.

It will be appreciated from the discussion above that the embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. For example the functionality provided by the data storage may in whole or in part be provided by a processor having one more data values stored on-chip. In addition the processing functionality may also be provided by devices which are supported by the electronic device. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein.

## Claims

1. A computer implemented method of controlling processing of network messages, the method comprising:
receiving a network message comprising request data to be processed at any one of a plurality of destinations in a geographic area;
selecting one of the plurality of destinations;
wherein selecting comprises obtaining a statistical model of request processing at each of the plurality of destinations and applying the statistical model to the request data to determine a response metric for each destination, and selecting the destination based on its response metric;
forwarding the network message to the selected destination, and receiving in response to the network message an observed response metric associated with processing of the request at the selected destination;
storing a plurality of items of request data and a plurality of observed response metrics, wherein each observed response metric is associated with a corresponding one of the plurality of items of request data; and
modifying the statistical model associated with one of the destinations; and
applying the modified statistical model to the stored items of request data to determine a modified response metric;
sending a command message to one of the destinations to control request processing at the destination, wherein the command message is based on at least one of:
(a) the modified response metric; and
(b) a comparison between the observed response metric and the modified response metric.

2. The method of claim 1 wherein the modifying comprises adjusting a parameter of the statistical model associated with a destination, and the command message comprises a command to modify request processing at the destination to reflect the adjusted parameter.

3. The method of claim 1 or 2 comprising:
displaying, in a three dimensional positional tracking virtual reality environment, a graphical representation of the plurality of destinations in the geographic area; and
obtaining input data based on a user manipulation in said environment; wherein modifying the statistical model comprises modifying the statistical model based on the input data.

4. The method of claim 3 wherein the input data identifies a destination, and the modifying comprises modifying the model associated with the identified destination.

5. The method of claim 4 wherein the modifying comprises adjusting a parameter of the statistical model associated with request processing at the identified destination.

6. The method of claim 5 wherein the command message comprises a command to adapt request processing at the destination based on the adjusted parameter.

7. The method of any of claims 3 to 6 further comprising indicating a comparison between the observed response metric and the modified response metric on the graphical representation of the plurality of destinations; and
selecting a destination based on the comparison.

8. A computer program product comprising program instructions configured to program a processor to perform the method of any preceding claim.

9. A computer apparatus configured to perform the method of any preceding claim.
